# EUROPEAN PATENT APPLICATION

(11) **EP 3 647 729 A1**
(43) Date of publication of application: **06.05.2020**
(21) Application number: 17916101.3
(22) Date of filing: 27.12.2017
(51) Int. Cl.: G01C 21/34, G01C 21/36

(54) **NAVIGATION METHOD, APPARATUS, EQUIPMENT AND COMPUTER READABLE STORAGE MEDIUM**

(30) Priority: 30.06.2017 CN 201710524159
(71) Applicant: Baidu Online Network Technology (Beijing) Co., Ltd, Beijing 100085 (CN)
(72) Inventor: CHEN, Xintao, Beijing 100085 (CN); QIN, Nanhao, Beijing 100085 (CN); MOU, Wenbin, Beijing 100085 (CN)
(74) Representative: dompatent von Kreisler Selting Werner - Partnerschaft von Patent- und Rechtsanwälten mbB
(86) International application number: PCT/CN2017/118841
(87) International publication number: WO 2019/000879

(57) **Abstract**

The present disclosure provides a navigation method and apparatus, a device and a computer readable storage medium. In the embodiments of the present disclosure, it is feasible to output a navigation details page including at least one navigation path according to a query starting point and a query finishing point provided by a user, then obtain a location where the user lies and a path location of each navigation path in the at least one navigation path, and then bind the user to one navigation path in the at least one navigation path, according to the location where the user lies and the path location of the each navigation path so that the user's movement identifier can be displayed on the bound navigation path. Since the binding processing is performed for the user and a navigation path displayed in the navigation details page, this can avoid the technical problem in the prior art that data interaction between the application and the query engine increases because an error existing in the positioning data causes the user to believe deviation from the navigation path and repeatedly perform navigation operations, thereby reducing the processing burden of the query engine.

## Description

The present disclosure claims priority to the Chinese patent application No.2017105241597 entitled "Navigation Method and Apparatus, Device and Computer Readable Storage Medium" filed on the filing date June 30, 2017, the entire disclosure of which is hereby incorporated by reference in its entirety.

### Field of the Disclosure

The present disclosure relates to path planning technologies, and particularly to a navigation method and apparatus, a device and a computer readable storage medium.

### Background of the Disclosure

As communication technologies develop, terminals integrate more and more functions so that system function lists of the terminals include more and more corresponding applications (APPs). Some applications involve some Location Based Service (LBS), also called positioning service, for example, Baidu Map, Baidu Navigation and Autonavi Navigation.

In LBS, applications related to location based service first display a location service interface to a user so that the user performs input, and then may, according to information input by the user, set information such as a query starting point and a query finishing point, and request a query engine to provide a navigation path. At this time, the query engine first provides the user with a navigation details page including multiple navigation paths, the user selects a navigation path from these navigation paths, and then navigation service of the navigation path begins to be provided to the user. In a middle portion of the navigation details page, the user's movement identifier for example a small blue arrow is always presented to indicate the user's location. Usually, some users, for example, users familiar with electronic map display or users having several years' driving experience, might directly use static display of these navigation paths provided by the navigation detail page for travel guidance.

However, certain drift phenomena might happen to positioning data. The user's movement identifier sometimes might appear beside a certain navigation path so that the user might believe that he himself already deviates from the navigation path, and execute navigation operations repeatedly. The so doing will increase data interaction between the application and the query engine and therefore cause increase of the processing burden of the query engine.

### Summary of the Disclosure

A plurality of aspects of the present disclosure provide a navigation method and apparatus, a device and a computer readable storage medium, to reduce the processing burden of the query engine.

According to another aspect of the present disclosure, there is provided a navigation method, comprising:
outputting a navigation details page according to a query starting point and a query finishing point provided by a user, the navigation details page including at least one navigation path;
obtaining a location where the user lies and a path location of each navigation path in the at least one navigation path;
binding the user to one navigation path in the at least one navigation path, according to the location where the user lies and the path location of the each navigation path;
displaying the user's movement identifier on the bound navigation path.

The above aspect and any possible implementation mode further provide an implementation mode: the binding the user to one navigation path in the at least one navigation path, according to the location where the user lies and the path location of the each navigation path comprises:
obtaining a distance between the user and the each navigation path according to the location where the user lies and the path location of the each navigation path; and
if the distance between the user and a navigation path in the at least one navigation path is minimal and the distance is smaller than or equal to a preset distance threshold, binding the user on the navigation path.

The above aspect and any possible implementation mode further provide an implementation mode: after the step of, if the distance between the user and a navigation path in the at least one navigation path is minimal and the distance is smaller than or equal to a preset distance threshold, binding the user on the navigation path, the method further comprises:
determining that the user deviates from the bound navigation path according to the location where the user lies and the path location of the bound navigation path; and
binding the user to another navigation path in said at least one navigation path according to the location where the user lies and path positions of other navigation paths in the at least one navigation path except for the navigation path.

The above aspect and any possible implementation mode further provide an implementation mode: after obtaining a location where the user lies and a path location of each navigation path in the at least one navigation path, the method further comprises:
determining that the user deviates from the at least one navigation path according to the location where the user lies and the path location of the each navigation path; and
updating the navigation paths included in the navigation details page according to the location where the user lies and the query finishing point.

The above aspect and any possible implementation mode further provide an implementation mode: the updating the navigation paths included in the navigation details page according to the location where the user lies and the query finishing point comprises:
performing path planning processing according to the location where the user lies and the query finishing point, to obtain at least one updated path; and
outputting the navigation details page including the at least one updated path.

The above aspect and any possible implementation mode further provide an implementation mode: the displaying the user's movement identifier on the bound navigation path comprises:
prominently displaying the bound navigation path on the navigation details page;
prominently displaying the user's movement identifier on the bound navigation path.

According to another aspect of the present disclosure, there is provided a navigation apparatus, comprising:
an output unit configured to output a navigation details page according to a query starting point and a query finishing point provided by a user, the navigation details page including at least one navigation path;
an obtaining unit configured to obtain a location where the user lies and a path location of each navigation path in the at least one navigation path;
a binding unit configured to bind the user to one navigation path in the at least one navigation path, according to the location where the user lies and the path location of the each navigation path;
the output unit is further configured to display the user's movement identifier on the bound navigation path.

The above aspect and any possible implementation mode further provide an implementation mode: the binding unit is specifically configured to
obtain a distance between the user and the each navigation path according to the location where the user lies and the path location of the each navigation path; and
if the distance between the user and a navigation path in the at least one navigation path is minimal and the distance is smaller than or equal to a preset distance threshold, bind the user on the navigation path.

The above aspect and any possible implementation mode further provide an implementation mode: the binding unit is further configured to
determine that the user deviates from the bound navigation path according to the location where the user lies and the path location of the bound navigation path; and
bind the user to another navigation path in said at least one navigation path according to the location where the user lies and path positions of other navigation paths in the at least one navigation path except for the navigation path.

The above aspect and any possible implementation mode further provide an implementation mode: the navigation apparatus further comprises an updating unit configured to
determine that the user deviates from the at least one navigation path according to the location where the user lies and the path location of the each navigation path; and
update the navigation paths included in the navigation details page according to the location where the user lies and the query finishing point.

The above aspect and any possible implementation mode further provide an implementation mode: the updating unit is specifically configured to
perform path planning processing according to the location where the user lies and the query finishing point, to obtain at least one updated path; and
output the navigation details page including the at least one updated path.

The above aspect and any possible implementation mode further provide an implementation mode: the output unit is specifically configured to
prominently display the bound navigation path on the navigation details page; and
prominently display the user's movement identifier on the bound navigation path.

According to a further aspect of the present disclosure, there is provided a device, comprising
one or more processor;
a storage for storing one or more programs,
said one or more programs, when executed by said one or more processors, enable said one or more processors to implement the navigation method according to the above first aspect.

According to a further aspect of the present disclosure, there is provided a computer readable storage medium on which a computer program is stored, wherein the program, when executed by a processor, implements the navigation method according to the above first aspect.

As known from the above technical solutions, in the embodiments of the present disclosure, it is feasible to output a navigation details page including at least one navigation path according to a query starting point and a query finishing point provided by a user, then obtain a location where the user lies and a path location of each navigation path in the at least one navigation path, and then bind the user to one navigation path in the at least one navigation path, according to the location where the user lies and the path location of the each navigation path so that the user's movement identifier can be displayed on the bound navigation path. Since the binding processing is performed for the user and a navigation path displayed in the navigation details page, this can avoid the technical problem in the prior art that data interaction between the application and the query engine increases because an error existing in the positioning data causes the user to believe deviation from the navigation path and repeatedly perform navigation operations, thereby reducing the processing burden of the query engine.

In addition, according to the technical solutions provided by the present disclosure, it is feasible to determine that the user deviates from the at least one navigation path according to the location where the user lies and path locations of these navigation paths provided by the navigation details page, and then update navigation paths included in the navigation details page according to the location where the user lies and the query finishing point, thereby avoiding the technical problem about failure to display these navigation paths on the electronic map with the user's location as the center since the user deviates from these navigation paths provided by the navigation details page.

In addition, the technical solution according to the present disclosure can be employed to effectively improve the user's experience.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
Fig. 1 is a flow chart of a navigation method according to an embodiment of the present disclosure;
Fig. 2 is a structural schematic diagram of a navigation apparatus according to another embodiment of the present disclosure;
Fig. 3 is a structural schematic diagram of a navigation apparatus according to a further embodiment of the present disclosure;
Fig. 4 illustrates a block diagram of an example computer system/server 12 adapted to implement an implementation mode of the present disclosure.

### Detailed Description of Preferred Embodiments

To make objectives, technical solutions and advantages of embodiments of the present disclosure clearer, technical solutions of embodiment of the present disclosure will be described clearly and completely with reference to figures in embodiments of the present disclosure. Obviously, embodiments described here are partial embodiments of the present disclosure, not all embodiments. All other embodiments obtained by those having ordinary skill in the art based on the embodiments of the present disclosure, without making any inventive efforts, fall within the protection scope of the present disclosure.

It needs to be appreciated that the terminals involved in the embodiments of the present disclosure comprise but are not limited to a mobile phone, a Personal Digital Assistant (PDA), a wireless handheld device, a tablet computer, a Personal Computer (PC), an MP3 player, an MP4 player, and a wearable device (e.g., a pair of smart glasses, a smart watch, or a smart bracelet).

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

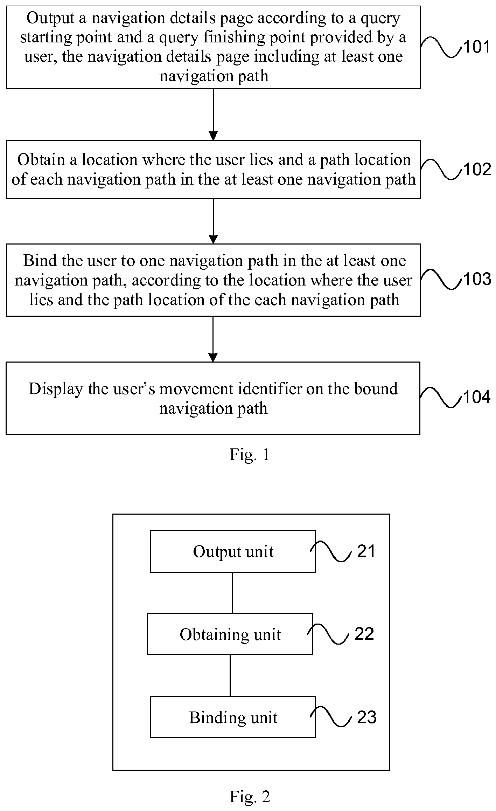

Fig. 1 is a flow chart of a navigation method according to an embodiment of the present disclosure. As shown in Fig. 1, the method comprises the following steps:
101: outputting a navigation details page according to a query starting point and a query finishing point provided by a user, the navigation details page including at least one navigation path.

102: obtaining a location where the user lies and a path location of each navigation path in the at least one navigation path.

Specifically, the location where the user lies may be specifically obtained according to the user's positioning data. To so-called user's positioning data may specifically be the user's positioning result, namely, geographical location data of the location where the user lies, obtained by the user-used terminal by employing various current positioning technologies, for example, Global Positioning System (GPS) technology, Wireless Fidelity (WIFI) positioning technology or base station positioning technology. This is not particularly limited in the present embodiment.

103: binding the user to one navigation path in the at least one navigation path, according to the location where the user lies and the path location of the each navigation path.

104: displaying the user's movement identifier on the bound navigation path.

It needs to be appreciated that par or all of a subject for executing 101-104 may be an application located at a local terminal, or a function unit such as a plug-in or Software Development Kit (SDK) arranged in the application located at the local terminal, or a query engine located in a network-side server, or a distributed type system located on the network side. This is not particularly limited in the present embodiment.

It may be understood that the application may be a native application (nativeAPP) installed on the terminal, or a webpage program (webApp) of a browser on the terminal. This is not particularly limited in the present embodiment.

As such, it is feasible to output a navigation details page including at least one navigation path according to a query starting point and a query finishing point provided by a user, then obtain a location where the user lies and a path location of each navigation path in the at least one navigation path, and then bind the user to one navigation path in the at least one navigation path, according to the location where the user lies and the path location of the each navigation path so that the user's movement identifier can be displayed on the bound navigation path. Since the binding processing is performed for the user and a navigation path displayed in the navigation details page, this can avoid the technical problem in the prior art that data interaction between the application and the query engine increases because an error existing in the positioning data causes the user to believe deviation from the navigation path and repeatedly perform navigation operations, thereby reducing the processing burden of the query engine.

In the present embodiment, the user wants to use the input query starting point and query finishing point to query for the navigation details page corresponding to the query starting point and query finishing point, and the navigation details page includes several navigation paths for example generally three navigation paths with the query starting point as a starting location and the query finishing point as a finishing location.

Usually, some applications involve some location-based services, for example, Baidu Map. These applications first display a location service interface to the user for the user to input information, then may, according to information input by the user, set information of query end points such as the query starting point and the query finishing point, and thereby request a query engine to provide a matched navigation path. Optionally, in a possible implementation mode of the present embodiment, before 101, it is specifically feasible to collect query keywords, also called query data, provided by a user.

Optionally, in a possible implementation mode of the present embodiment, before 101, it is specifically feasible to collect the query keywords provided by the user, namely, the query starting point and the query finishing point, also called query data, which can be implemented by a query command triggered by the user. It is specifically possible to trigger the query command in the following manners:
Manner 1:
   The user may input the query keywords on a page presented by the current application. The query keywords may include the query starting point and the query finishing point. Then, the query command is triggered by clicking a query button on the page, for example, a navigation control provided by Baiddu Map application, and the query command includes the query keywords. As such, after the query command is received, the query keywords included therein may be obtained by parsing.
Manner 2:
   It is feasible to employ an asynchronous loading technology such as Ajax asynchronous loading or Jsonp asynchronous loading to obtain, in real time, contents input by the user on the page presented by the current application. To distinguish from the query keywords, the input contents at this time may be called input keywords. Then, the query command is triggered by clicking a query button on the page, for example, a navigation control provided by Baiddu Map application, or by successfully obtaining one input character. The query command includes the query keywords. As such, after the query command is received, the query keywords included therein may be obtained by parsing. Specifically, it is feasible to provide an interface such as an Ajax interface or Jsonp interface. These interfaces may write by using a language such as Java or Hypertext Preprocessor (PHP) language, and their specific invocation may be written by using Jquery, or a native language such as JavaScript.
Manner 3: the user may long-press a speech query button on the page presented by the current application, speak speech content to be input, and then release the speech query button to trigger the query command. The query command includes query keywords in a text form converted from the spoken speech content. As such, after the query command is received, the query keywords included therein may be obtained by parsing.
Manner 4: the user may click a speech query button on the page presented by the current application, speak speech content to be input, and trigger the query command after a period of time, e.g., 2 seconds after completion of the speaking of the speech content. The query command includes query keywords in a text form converted from the spoken speech content. As such, after the query command is received, the query keywords included therein may be obtained by parsing.

In most cases, the user's query purpose might be random or not specific so that the query starting point and query finishing point included in the query data provided by the user might be uncertain to a certain degree. Therefore, it is feasible to perform proper expansion processing for the query starting point and query finishing point included in by query data to expand a scope of the query starting point and query finishing point of the query of this time so that the query starting point is no longer limited to the user-provided query starting point, and the query finishing point is no longer limited to the user-provided query finishing point. As such, the query result can be enabled to better meet the user's real travel intention.

Optionally, in a possible implementation mode of the present embodiment, in 101, upon obtaining the navigation details page including at least one navigation path, it is feasible to further prominently display, e.g., highlight or display in boldface, a designated navigation path in said at least one navigation path in the navigation map, and ordinarily display other navigation paths in said at least one navigation path except for the designated navigation path.

The so-called navigation map is short for an electronic map and is a map stored and viewed in a digital manner with computer technologies. From the perspective of the form of composition, the navigation map is comprised of roads, background, annotations and Points of Interest (POI). Certainly, the navigation map may further include many special contents such as 3D crossing real-scenario enlarged views and 3D buildings.

In this implementation mode, the so-called navigation path is not a certainly invariable navigation path in each query process, but varies with different settings of applications and the user's different operations.

For example, it is feasible to, according to a default setting or user setting of the application, select, from the at least one navigation path, a navigation path which consumes the shortest time or has the shortest navigation path distance, as the designated navigation path;
Or, again for example, it is further feasible to, according to the user's operation instructions, select a navigation path from the at least one navigation path, as the designated navigation path.

As such, the designated navigation path is prominently displayed in the navigation map so that the user can quickly obtain an optimal navigation path and the navigation efficiency can be improved effectively.

Optionally, in a possible implementation mode of the present embodiment, in 103, it is specifically feasible to obtain a distance between the user and the each navigation path according to the location where the user lies and the path location of the each navigation path. If the distance between the user and a navigation path in the at least one navigation path is minimal and the distance is smaller than or equal to a preset distance threshold, the user may be bound on the navigation path.

If the distance between the user and a navigation path in the at least one navigation path is minimal and the distance is larger than the preset distance threshold, the binding processing may not be executed.

In a specific implementation, it is specifically feasible to bind the user (namely, the user's location) on the closest navigation path, according to the distance between the location where the user lies and each navigation path in the at least one navigation path, if the distance is smaller than or equal to the preset distance threshold, for example 10 meters. As such, it is possible to perform annotation processing for the user's position on the bound navigation path.

Specifically, it is specifically feasible to vertically introduce a straight line from the location where the user lies to each navigation path of the at least one navigation path, and calculate a distance of the straight line as a distance from the location where the user lies to each navigation path of the at least one navigation path. Then, it is feasible to compare the obtained distance, and if the closest distance is smaller than or equal to the preset distance threshold, regard a navigation path corresponding to the distance as the navigation path where the user lie, and then bind the user's location on the navigation path.

To help the user to understand at a glance the navigation path where the user lies, it is further feasible to re-output the at least one navigation path in the navigation map. Optionally, in a possible implementation mode of the present embodiment, in 104, it is feasible to prominently display the bound navigation path on the navigation details page, and prominently display the user's movement identifier on the bound navigation path.

Specifically, it is feasible to prominently display, e.g., highlight or display in boldface, the bound navigation path in the navigation map, and ordinarily display other navigation paths in said at least one navigation path except for the bound navigation path. Furthermore, it is feasible to prominently display the user's movement identifier on the bound navigation path, e.g., display the user's movement identifier with a highlight small arrow.

Optionally, in a possible implementation mode of the present embodiment, after 103, it is further feasible to determine that the user deviates from the bound navigation path according to the location where the user lies and the path location of the bound navigation path, and then bind the user to another navigation path in said at least one navigation path according to the location where the user lies and path positions of other navigation paths in the at least one navigation path except for the navigation path.

In a specific implementation, it is specifically feasible to obtain a distance from the location where the user lies to the bound navigation path, according to the location where the user lies and the path location of the bound navigation path. It is feasible to determine the user deviates from the bound navigation path if the distance is larger than a preset first deviation threshold for example 20 meters. It is feasible to determine the user does not deviate from the bound navigation path if the distance is smaller than or equal to the preset first deviation threshold for example 20 meters.

The first deviation threshold here may be set as the same threshold as the preset distance threshold. If the distance from the location where the user lies to a navigation path is smaller than or equal to the threshold, the user may be bound to the navigation path; if the distance from the location where the user lies to a navigation path is larger than the threshold, it may be believed that the user deviates from the navigation path.

Further optionally, the first deviation threshold here may be set as a threshold different from the preset distance threshold, and the first deviation threshold is larger than the distance threshold.

As such, the user needs to be re-bound to other navigation paths. For particulars, please refer to relevant content about binding the user to a navigation path in the at least one navigation path. No detailed description is presented any more here.

Optionally, in a possible implementation mode of the present embodiment, after 102, it is further feasible to determine that the user deviates from the at least one navigation path according to the location where the user lies and the path location of each navigation path. Then, it is feasible to update the navigation paths included in the navigation details page according to the location where the user lies and the query finishing point.

In a specific implementation, it is specifically feasible to obtain a distance from the location where the user lies to the each navigation path, according to the location where the user lies and the path location of the each navigation path. It is feasible to determine the user deviates from the at least one navigation path if the distance to the each navigation path is larger than a preset second deviation threshold for example 20 meters. It is feasible to determine the user does not deviate from the at least one navigation path if the distance to any navigation path is smaller than or equal to the preset second deviation threshold for example 20 meters. The second deviation threshold may be equal to the first deviation threshold, or not equal to the first deviation threshold. This is not particularly limited in the present embodiment.

As such, it is necessary to perform path planning processing again, namely, perform path planning processing according to the location where the user lies and the query finishing point, to obtain at least one updated path, and then, it is feasible to output the navigation details page including the at least one updated path.

The present disclosure provides a navigation method of intelligent tracking based on the user's location. As compared with the current navigation method, the navigation method according to the present disclosure has the following advantages:
A. Solve mobile phone GPS drift phenomenon. The binding of the navigation path is performed in real time in the route details page, and the user's movement identifier does not deviate because of accidental GPS drift phenomenon, thereby bringing about better positioning experience to the user.
B. Meet the user's demands for more routes. When the user's travel path deviates from the already-planned navigation path, it is possible to re-plan a new navigation path for the user through automatic yaw processing, perform the binding of the navigation path in real time, and meet the user's demands for more routes.

In the present embodiment, it is feasible to output a navigation details page including at least one navigation path according to a query starting point and a query finishing point provided by a user, then obtain a location where the user lies and a path location of each navigation path in the at least one navigation path, and then bind the user to one navigation path in the at least one navigation path, according to the location where the user lies and the path location of the each navigation path so that the user's movement identifier can be displayed on the bound navigation path. Since the binding processing is performed for the user and a navigation path displayed in the navigation details page, this can avoid the technical problem in the prior art that data interaction between the application and the query engine increases because an error existing in the positioning data causes the user to believe deviation from the navigation path and repeatedly perform navigation operations, thereby reducing the processing burden of the query engine.

In addition, according to the technical solution provided by the present disclosure, it is feasible to determine that the user deviates from the at least one navigation path according to the location where the user lies and path locations of these navigation paths provided by the navigation details page, and then update navigation paths included in the navigation details page according to the location where the user lies and the query finishing point, thereby avoiding the technical problem about failure to display these navigation paths on the electronic map with the user's location as the center since the user deviates from these navigation paths provided by the navigation details page.

In addition, the technical solution according to the present disclosure can be employed to effectively improve the user's experience.

It needs to be appreciated that regarding the aforesaid method embodiments, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In the above embodiments, different emphasis is placed on respective embodiments, and reference may be made to related depictions in other embodiments for portions not detailed in a certain embodiment.

Fig. 2 is a structural schematic diagram of a navigation apparatus according to another embodiment of the present disclosure. As shown in Fig. 2, the navigation apparatus of the present embodiment may include an output unit 21, an obtaining unit 22 and a binding unit 23, wherein the output unit 21 is configured to output a navigation details page according to a query starting point and a query finishing point provided by a user, the navigation details page including at least one navigation path; the obtaining unit 22 is configured to obtain a location where the user lies and a path location of each navigation path in the at least one navigation path; the binding unit 23 is configured to bind the user to one navigation path in the at least one navigation path, according to the location where the user lies and the path location of the each navigation path; the output unit 21 is further configured to display the user's movement identifier on the bound navigation path.

It needs to be appreciated that all or part of the navigation apparatus according to the present embodiment may be an application located at a local terminal, or a function unit such as a plug-in or Software Development Kit (SDK) arranged in the application located at the local terminal, or a query engine located in a network-side server, or a distributed type system located on the network side. This is not particularly limited in the present embodiment.

It may be understood that the application may be a native application (nativeAPP) installed on the terminal, or a webpage program (webApp) of a browser on the terminal. This is not particularly limited in the present embodiment.

Optionally, in a possible implementation mode of the present embodiment, the binding unit 23 is specifically configured to obtain a distance between the user and the each navigation path according to the location where the user lies and the path location of the each navigation path; if the distance between the user and a navigation path in the at least one navigation path is minimal and the distance is smaller than or equal to a preset distance threshold, bind the user on the navigation path.

Optionally, in a possible implementation mode of the present embodiment, the binding unit 23 is further configured to determine that the user deviates from the bound navigation path according to the location where the user lies and the path location of the bound navigation path; and bind the user to another navigation path in said at least one navigation path according to the location where the user lies and path positions of other navigation paths in the at least one navigation path except for the navigation path.

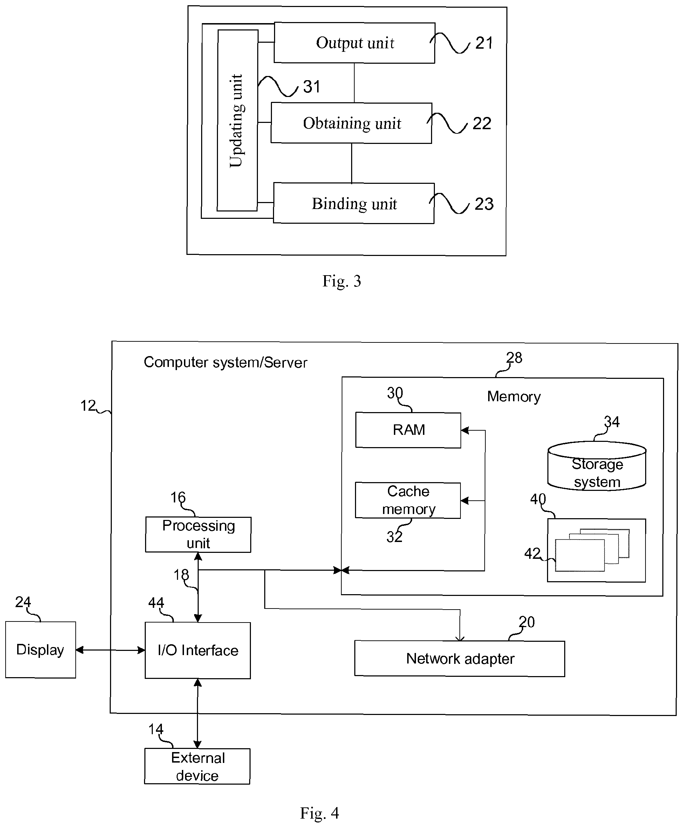

Optionally, in a possible implementation mode of the present embodiment, as shown in Fig. 3, the navigation apparatus according to the present embodiment may further include an updating unit 31 configured to determine that the user deviates from the at least one navigation path according to the location where the user lies and the path location of the each navigation path; and update the navigation paths included in the navigation details page according to the location where the user lies and the query finishing point.

In this implementation mode, the updating unit 31 is specifically configured to perform path planning processing according to the location where the user lies and the query finishing point, to obtain at least one updated path; and output the navigation details page including the at least one updated path.

Optionally, in a possible implementation mode of the present embodiment, the output unit 21 is specifically configured to prominently display the bound navigation path on the navigation details page; and prominently display the user's movement identifier on the bound navigation path.

It needs to be appreciated that the method in the embodiment corresponding to Fig. 1 may be implemented by the navigation apparatus provided in the present embodiment. For detailed description, please refer to relevant content in the embodiment corresponding to Fig. 1, and no detailed description will be presented any longer.

In the present embodiment, the output unit outputs a navigation details page including at least one navigation path according to a query starting point and a query finishing point provided by a user, then the obtaining unit obtains a location where the user lies and a path location of each navigation path in the at least one navigation path, and then the binding unit binds the user to one navigation path in the at least one navigation path, according to the location where the user lies and the path location of the each navigation path so that the user's movement identifier can be displayed on the bound navigation path. Since the binding processing is performed for the user and a navigation path displayed in the navigation details page, this can avoid the technical problem in the prior art that data interaction between the application and the query engine increases because an error existing in the positioning data causes the user to believe deviation from the navigation path and repeatedly perform navigation operations, thereby reducing the processing burden of the query engine.

In addition, according to the technical solution provided by the present disclosure, it is feasible to determine that the user deviates from the at least one navigation path according to the location where the user lies and path locations of these navigation paths provided by the navigation details page, and then update navigation paths included in the navigation details page according to the location where the user lies and the query finishing point, thereby avoiding the technical problem about failure to display these navigation paths on the electronic map with the user's location as the center since the user deviates from these navigation paths provided by the navigation details page.

In addition, the technical solution according to the present disclosure can be employed to effectively improve the user's experience.

Fig. 4 illustrates a block diagram of an example computer system/server 12 adapted to implement an implementation mode of the present disclosure. The computer system/server 12 shown in Fig. 4 is only an example and should not bring about any limitation to the function and scope of use of the embodiments of the present disclosure.

As shown in Fig. 4, the computer system/server 12 is shown in the form of a general-purpose computing device. The components of computer system/server 12 may include, but are not limited to, one or more processors (processing units) 16, a memory 28, and a bus 18 that couples various system components including system memory 28 and the processor 16.

Bus 18 represents one or more of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system/server 12 typically includes a variety of computer system readable media. Such media may be any available media that is accessible by computer system/server 12, and it includes both volatile and non-volatile media, removable and non-removable media.

Memory 28 can include computer system readable media in the form of volatile memory, such as random access memory (RAM) 30 and/or cache memory 32. Computer system/server 12 may further include other removable/non-removable, volatile/non-volatile computer system storage media. By way of example only, storage system 34 can be provided for reading from and writing to a non-removable, non-volatile magnetic media (not shown in Fig. 4 and typically called a "hard drive"). Although not shown in Fig. 4, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each drive can be connected to bus 18 by one or more data media interfaces. The memory 28 may include at least one program product having a set (e.g., at least one) of program modules that are configured to carry out the functions of embodiments of the present disclosure.

Program/utility 40, having a set (at least one) of program modules 42, may be stored in the system memory 28 by way of example, and not limitation, as well as an operating system, one or more disclosure programs, other program modules, and program data. Each of these examples or a certain combination thereof might include an implementation of a networking environment. Program modules 42 generally carry out the functions and/or methodologies of embodiments of the present disclosure.

Computer system/server 12 may also communicate with one or more external devices 14 such as a keyboard, a pointing device, a display 24, etc.; with one or more devices that enable a user to interact with computer system/server 12; and/or with any devices (e.g., network card, modem, etc.) that enable computer system/server 12 to communicate with one or more other computing devices. Such communication can occur via Input/Output (I/O) interfaces 22. Still yet, computer system/server 12 can communicate with one or more networks such as a local area network (LAN), a general wide area network (WAN), and/or a public network (e.g., the Internet) via network adapter 20. As depicted in Fig. 4, network adapter 20 communicates with the other communication modules of computer system/server 12 via bus 18. It should be understood that although not shown, other hardware and/or software modules could be used in conjunction with computer system/server 12. Examples, include, but are not limited to: microcode, device drivers, redundant processing units, external disk drive arrays, RAID systems, tape drives, and data archival storage systems, etc.

The processor 16 executes various function applications and data processing by running programs stored in the memory 28, for example, implement the navigation method provided by the embodiment corresponding to Fig. 1.

Another embodiment of the present disclosure further provides a computer-readable storage medium on which a computer program is stored. The program, when executed by a processor, can implement the navigation method provided by the embodiment corresponding to Fig. 1.

Specifically, the computer-readable medium of the present embodiment may employ any combinations of one or more computer-readable media. The machine readable medium may be a machine readable signal medium or a machine readable storage medium. A machine readable medium may include, but not limited to, an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the text herein, the computer readable storage medium can be any tangible medium that include or store programs for use by an instruction execution system, apparatus or device or a combination thereof.

The computer-readable signal medium may be included in a baseband or serve as a data signal propagated by part of a carrier, and it carries a computer-readable program code therein. Such propagated data signal may take many forms, including, but not limited to, electromagnetic signal, optical signal or any suitable combinations thereof. The computer-readable signal medium may further be any computer-readable medium besides the computer-readable storage medium, and the computer-readable medium may send, propagate or transmit a program for use by an instruction execution system, apparatus or device or a combination thereof.

The program codes included by the computer-readable medium may be transmitted with any suitable medium, including, but not limited to radio, electric wire, optical cable, RF or the like, or any suitable combination thereof.

Computer program code for carrying out operations disclosed herein may be written in one or more programming languages or any combination thereof. These programming languages include an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented in other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, Read-Only Memory (ROM), a Random Access Memory (RAM), magnetic disk, or an optical disk.

Finally, it is appreciated that the above embodiments are only used to illustrate the technical solutions of the present disclosure, not to limit the present disclosure; although the present disclosure is described in detail with reference to the above embodiments, those having ordinary skill in the art should understand that they still can modify technical solutions recited in the aforesaid embodiments or equivalently replace partial technical features therein; these modifications or substitutions do not make essence of corresponding technical solutions depart from the spirit and scope of technical solutions of embodiments of the present disclosure.

## Claims

1. A navigation method, wherein the navigation method comprises:
outputting a navigation details page according to a query starting point and a query finishing point provided by a user, the navigation details page including at least one navigation path;
obtaining a location where the user lies and a path location of each navigation path in the at least one navigation path;
binding the user to one navigation path in the at least one navigation path, according to the location where the user lies and the path location of the each navigation path;
displaying the user's movement identifier on the bound navigation path.

2. The method according to claim 1, wherein the binding the user to one navigation path in the at least one navigation path, according to the location where the user lies and the path location of the each navigation path comprises:
obtaining a distance between the user and the each navigation path according to the location where the user lies and the path location of the each navigation path; and
if the distance between the user and a navigation path in the at least one navigation path is minimal and the distance is smaller than or equal to a preset distance threshold, binding the user on the navigation path.

3. The method according to claim 1, wherein after the step of, if the distance between the user and a navigation path in the at least one navigation path is minimal and the distance is smaller than or equal to a preset distance threshold, binding the user on the navigation path, the method further comprises:
determining that the user deviates from the bound navigation path according to the location where the user lies and the path location of the bound navigation path; and
binding the user to another navigation path in said at least one navigation path according to the location where the user lies and path positions of other navigation paths in the at least one navigation path except for the navigation path.

4. The method according to claim 1, wherein after obtaining a location where the user lies and a path location of each navigation path in the at least one navigation path, the method further comprises:
determining that the user deviates from the at least one navigation path according to the location where the user lies and the path location of the each navigation path; and
updating the navigation paths included in the navigation details page according to the location where the user lies and the query finishing point.

5. The method according to claim 4, wherein the updating the navigation paths included in the navigation details page according to the location where the user lies and the query finishing point comprises:
performing path planning processing according to the location where the user lies and the query finishing point, to obtain at least one updated path; and
outputting the navigation details page including the at least one updated path.

6. The method according to any of claims 1-5, wherein the displaying the user's movement identifier on the bound navigation path comprises:
prominently displaying the bound navigation path on the navigation details page;
prominently displaying the user's movement identifier on the bound navigation path.

7. A navigation apparatus, wherein the navigation apparatus comprises:
an output unit configured to output a navigation details page according to a query starting point and a query finishing point provided by a user, the navigation details page including at least one navigation path;
an obtaining unit configured to obtain a location where the user lies and a path location of each navigation path in the at least one navigation path;
a binding unit configured to bind the user to one navigation path in the at least one navigation path, according to the location where the user lies and the path location of the each navigation path;
the output unit is further configured to display the user's movement identifier on the bound navigation path.

8. The apparatus according to claim 7, wherein the binding unit is specifically configured to
obtain a distance between the user and the each navigation path according to the location where the user lies and the path location of the each navigation path; and
if the distance between the user and a navigation path in the at least one navigation path is minimal and the distance is smaller than or equal to a preset distance threshold, bind the user on the navigation path.

9. The apparatus according to claim 7, wherein the binding unit is further configured to
determine that the user deviates from the bound navigation path according to the location where the user lies and the path location of the bound navigation path; and
bind the user to another navigation path in said at least one navigation path according to the location where the user lies and path positions of other navigation paths in the at least one navigation path except for the navigation path.

10. The apparatus according to claim 7, wherein the navigation apparatus further comprises an updating unit configured to
determine that the user deviates from the at least one navigation path according to the location where the user lies and the path location of the each navigation path; and
update the navigation paths included in the navigation details page according to the location where the user lies and the query finishing point.

11. The apparatus according to claim 10, wherein the updating unit is specifically configured to
perform path planning processing according to the location where the user lies and the query finishing point, to obtain at least one updated path; and
output the navigation details page including the at least one updated path.

12. The apparatus according to any of claims 7-11, wherein the output unit is specifically configured to
prominently display the bound navigation path on the navigation details page; and
prominently display the user's movement identifier on the bound navigation path.

13. A device, wherein the device comprises:
one or more processor;
a storage for storing one or more programs,
said one or more programs, when executed by said one or more processors, enable said one or more processors to implement the method according to any of claims 1-6.

14. A computer readable storage medium on which a computer program is stored, wherein the program, when executed by a processor, implements the method according to any of claims 1-6.
